# EUROPÄISCHE PATENTSCHRIFT

(11) **EP 1 930 193 B1**
(45) Veröffentlichungstag und Bekanntmachung des Hinweises auf die Patenterteilung: **24.11.2010**
(21) Anmeldenummer: 07023506.4
(22) Anmeldetag: 05.12.2007
(51) Int. Cl.: B60H 1/00

(54) **Vorrichtung zur Luftmengenregelung, insbesondere für eine Kraftfahrzeug-Klimaanlage**
Device for regulating air flow, in particular for the air conditioning system of a vehicle
Dispositif destiné au réglage de la quantité d'air, en particulier pour la climatisation d'un véhicule automobile

(30) Priorität: 08.12.2006 DE 102006058381
(43) Veröffentlichungstag der Anmeldung: 11.06.2008
(73) Patentinhaber: Behr GmbH & Co. KG, 70469 Stuttgart (DE)
(72) Erfinder: Venetidis, Varsamis, 70806 Kornwestheim (DE); Schweizer, Gebhard, 71229 Leonberg (DE); Roß, Reinhold, 71701 Schwieberdingen (DE); Lindauer, Sascha, 73553 Alfdorf (DE)

(56) Entgegenhaltungen:
- EP-A- 0 326 301
- DE-A1- 10 361 108
- DE-A1- 19 963 796
- GB-A- 2 128 322
- US-A1- 2006 086 495

## Beschreibung

Die Erfindung betrifft eine Vorrichtung mit einem Gehäuse und einer Klappenanordnung zur Luftmengenregelung, insbesondere für eine Kraftfahrzeug-Klimaanlage, gemäß dem Oberbegriff des Anspruchs 1 und ein Klimagerät mit einer Vorrichtung zur Luftmengenregelung gemäß Anspruch 9.

Aus der DE 103 61 108 A1 ist eine Vorrichtung zur Regelung des von einem Gebläse angesaugten Luftstroms in Bezug auf die Zusammensetzung der dem Fahrzeuginnenraum zuzuführenden Luft in Bezug auf Frisch- und/oder Umluft. Hierbei ist eine Klappenanordnung für die Frischluftöffnung vorgesehen, die mindestens zwei um parallel zueinander verlaufende Schwenkachsen verschwenkbare Klappenteile aufweist, wobei die beiden Klappenteile im geschlossenen Zustand der Klappenanordnung aneinander anliegen und bei einer Bewegung zumindest eines Klappenteils vom geschlossenen Zustand in einen Zustand der teilweisen Öffnung oder umgekehrt, aneinander abrollen und/oder aneinander gleiten. Dies ermöglicht ein dichtes Schließen, wofür zudem bevorzugt mindestens eines der beiden Klappenteile zumindest im Anlagebereich außen elastisch ausgebildet ist, so dass ein dichtes Schließen ohne Zwischensteg als Klappenanschlag möglich ist. Der angesaugte Luftstrom wird einem kurzen gemeinsamen Luftkanalbereich zugeführt, welcher direkt zum Gebläse führt. Zur Regelung eines Umluftluftstroms, welcher über eine zweite Öffnung dem gemeinsamen Luftkanalbereich zuführbar ist, ist hierbei eine herkömmliche Klappe mit einer zentral angeordneten Schwenkachse vorgesehen. Nachteilig hierbei ist jedoch ein relativ großer Bauraumbedarf.

US 2006/0086495 A1 offenbart eine Vorrichtung zur Luftmengeregelung nach dem Oberbegriff des Anspruchs 1.

Es ist Aufgabe der Erfindung, eine verbesserte Vorrichtung zur Luftmengenregelung zur Verfügung zu stellen.

Diese Aufgabe wird gelöst durch eine Vorrichtung mit einer Klappenanordnung mit den Merkmalen des Anspruchs 1. Vorteilhafte Ausgestaltungen sind Gegenstand der Unteransprüche.

Erfindungsgemäß ist eine Vorrichtung zur Luftmengenregelung mit in einem Gehäuse ausgebildeten Luftkanälen und mindestens zwei Klappen zum Öffnen und Schließen von Öffnungen vorgesehen, welche die Luftzusammensetzung der aus unterschiedlichen, zuführenden Luftkanälen kommenden Luft in einem gemeinsamen, weiterführenden, dritten Luftkanal regeln, wobei mindestens zwei der Öffnungen, deren Luftdurchlass von unterschiedlichen Klappen regelbar ist, dem gleichen zuführenden Luftkanal zugeordnet sind, und eine der Klappen für eine Regelung des Luftdurchlasses durch zwei Öffnungen unterschiedlicher Luftkanäle zugeordnet ist. Durch eine entsprechende Ausgestaltung kann trotz eines begrenzten Bauraums im Wesentlichen der gesamte Luftansaugquerschnitt genutzt werden. Ferner lässt sich die Luftzufuhr zumindest von einem Luftkanal durch das Vorsehen zweier Klappen optimieren, so dass bei sich ändernden Bedingungen seitens des entsprechenden Luftkanals schnell die Klappenstellung der einen Klappe angepasst werden kann und sich somit die Zusammensetzung der Luft aus den beiden Luftkanälen nicht ändert. Eine Betätigung der anderen Klappe, welche Öffnungen beider Luftkanäle regelt, ist nicht erforderlich.

Bei den Klappen handelt es sich insbesondere um Flügelklappen mit einem Flügel, d.h. die Schwenkachse der Klappen verläuft im Bereich einer Außenkante der Klappenfläche. Hierbei ist die Schwenkachse der Klappen bevorzugt luftanströmseitig angeordnet. Die freien Enden der Klappen sind hierbei relativ dicht am Eintrittsquerschnitt des Gehäuses vorbeischwenkbar.

Die Schwenkachse einer ersten Klappe, welche den Luftdurchlass durch zwei unterschiedlichen Luftkanälen zugeordneten Öffnungen regelt, liegt bevorzugt in einer Ebene, die senkrecht zur Mittellängsachse des dritten Luftkanals angeordnet ist, und ist in dieser Ebene seitlich versetzt bezüglich der Mittellängsachse des dritten Luftkanals. Insbesondere bevorzugt tangieren sich die Schwenkachse und der entgegen der Luftanströmrichtung fortgesetzte, üblicherweise zylinderförmige Wandbereich des dritten Luftkanals, welcher in Luftströmungsrichtung in dem Luftansaugkanal eines nachfolgend angeordneten Gebläses fortgeführt ist.

Die Schwenkachse einer zweiten Klappe, welche den Luftdurchlass durch eine Öffnung regelt, schneidet vorzugsweise die Mittellängsachse des dritten Luftkanals oder verläuft zumindest in der Nähe derselben.

Besonders bevorzugt sind die Schwenkachsen der Klappen unterschiedlich beabstandet von einem am Ende des dritten Luftkanals angeordneten Gebläse angeordnet, wobei die zentral angeordnete Schwenkachse näher am Gebläse angeordnet ist als die seitlich versetzt angeordnete Schwenkachse. Die Schwenkachsen der Klappen in einer Ebene angeordnet, die in einem Winkel von 25 bis 75°, insbesondere 35° bis 65° und insbesondere bevorzugt in einem Winkel von 45° +/- 5° bezüglich der Mittellängsachse des dritten Luftkanals angeordnet ist. Trotz der versetzten Anordnung reichen in den entsprechenden Stellungen der Klappen gemäß einer besonders bevorzugten Ausführungsform die Enden der Klappen bis in im Wesentlichen den gleichen Abstand vom Gebläse heran.

Alternativ können die Schwenkachsen der Klappen beispielsweise auch in Bezug auf die Ansaugrichtung der Luft nebeneinander oder übereinander angeordnet sein.

Der Luftkanal ist mit den mindestens zwei Öffnungen am Ende, deren Luftdurchlass mittels zweier unterschiedlicher Klappen regelbar sind, ein Frischluftkanal, über den Frischluft von der Umgebung des Fahrzeugs dem Fahrzeuginnenraum zuführbar ist. Beim anderen Luftkanal handelt es sich bevorzugt im einen Umluftkanal, über den Luft aus dem Innenraum des Fahrzeugs angesaugt wird.

Die Klappen sind unabhängig oder im Wesentlichen unabhängig voneinander einstellbar, wobei die Einstellung zumindest der Klappe, die ausschließlich der Frischluft zugeordnet ist, in Abhängigkeit des Luftdrucks im Bereich der Luftansaugung und/oder der Fahrtgeschwindigkeit erfolgt. Bei der Einstellung der Klappe ist ferner die Gebläsedrehzahl zu berücksichtigen, die bei großem Staudruck, also insbesondere bei hohen Fahrgeschwindigkeiten, und 100%-Frischluftzufuhr, gegebenenfalls auch verringert werden kann, um die Gesamtluftmenge, die dem Innenraum zugeführt wird, konstant zu halten.

Im Folgenden wird die Erfindung anhand eines Ausführungsbeispiels unter Bezugnahme auf die Zeichnung im Einzelnen erläutert. Es zeigen:
- Fig. 1: einen Schnitt durch ein Luftführungsgehäuse einer Kraftfahrzeug-Klimaanlage mit einer erfindungsgemäßen Vorrichtung zur Luftmengenregelung in der Stellung 100% Frischluft,
- Fig. 2: das Luftführungsgehäuse von Fig. 1, wobei die Vorrichtung in der Stellung 100% Umluft ist,
- Fig.3: das Luftführungsgehäuse von Fig. 1, wobei die Vorrichtung in einer Stellung Umluft mit Frischluftbeimischung ist, und
- Fig. 4: das Luftführungsgehäuse von Fig. 1, wobei die Vorrichtung in einer Stellung Frischluft mit Umluftbeimischung ist.

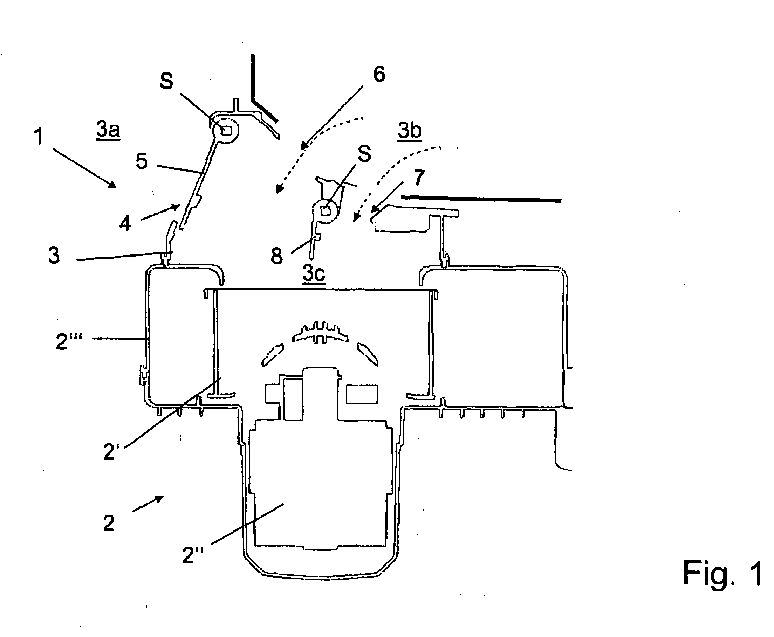

Fig. 1 zeigt einen Teil einer Kraftfahrzeug-Klimaanlage 1, wobei vorliegend nur das Gebläse 2 mit einem Laufrad 2', einem Gebläsemotor 2" und einem Gebläsegehäuse 2"' samt einem Teil des Gehäuses 3 im Luftansaugbereich dargestellt sind. Im Gehäuse 3 sind Luftkanäle ausgebildet, wobei vorliegend ein Umluftkanal 3a und ein Frischluftkanal 3b für eine Zuführung von Luft und ein Misch- und Ansaugkanal 3c für die Weiterleitung der Luft zum Gebläse 2 vorgesehen sind, wobei der Misch- und Ansaugkanal 3c direkt in den Ansaugkanal des Gebläses 3 übergeht. Das Gehäuse 3 weist am Ende des Umluftkanals eine Umluftöffnung 4, die durch eine erste Klappe 5 stufenlos öffen- und verschließbar ist, durch welche Umluft aus dem Fahrzeuginnenraum angesaugt und nach Durchströmen der Klimaanlage temperiert wieder demselben zuführbar ist, und am Ende des Frischtuftkanals 3b zwei Frischluftöffnungen 6 und 7 auf, wobei die erste Frischluftöffnung 6 durch die erste Klappe 5 stufenlos öffen- und verschließbar ist, was in Abhängigkeit mit dem Öffnungs- bzw. Schließzustand der Umluftöffnung 4 erfolgt, und die zweite Frischluftöffnung 7 durch eine getrennt von der ersten Klappe 5 ausgebildete, kleinere zweite Klappe 8 stufenlos öffen- und verschließbar. Aufgrund eines gemeinsamen Aktuators (nicht dargestellt) für beide Klappen 5 und 8 sind die Klappenstellungen vorliegend nicht unabhängig voneinander einstellbar.

Auf Grund ihrer Funktion wird auf die gesamte Anordnung auch als Vorrichtung zur Luftmengenregelung Bezug genommen. Die Vorrichtung ist benachbart zu einem Stirnwandblech in einem Kraftfahrzeug angeordnet, das in der Zeichnung schematisch mit dicken Linien dargestellt ist, wobei der Frischluftkanal 3b das Stirnwandblech durchdringt.

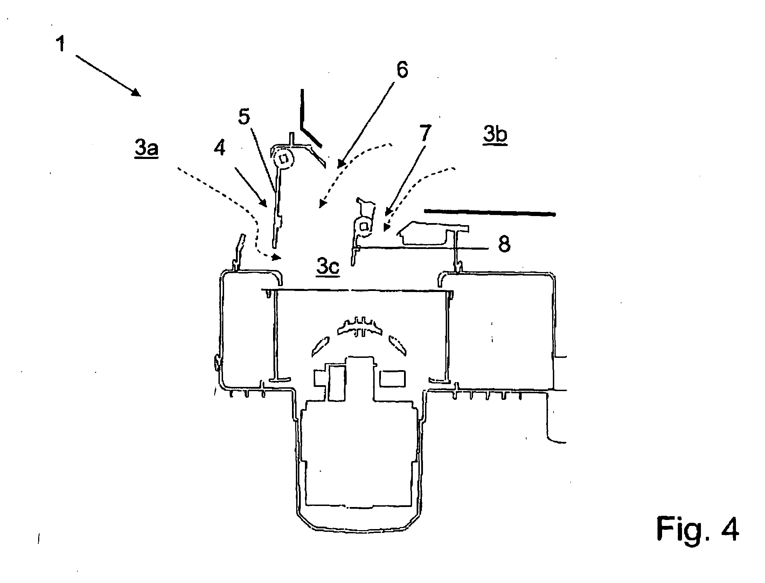

Bei beiden Klappen 5 und handelt es sich um im Prinzip bekannte Flügelklappen mit einer an einem Rand der Klappenfläche verlaufenden Schwenkachse S. Wie aus der Zeichnung ersichtlich, verlaufen die Schwenkachsen S der beiden Klappen 5 und 8 parallel zueinander, wobei die Schwenkachsen S jeweils luftanströmseitig angeordnet sind. Die Schwenkachse S der Klappe 5, welche den Luftdurchlass durch die beiden, den beiden unterschiedlichen Luftkanälen zugeordneten Öffnungen 4 und 6 regelt, ist in Bezug auf den Misch- und Ansaugkanal 3c seitlich versetzt angeordnet, wobei sie vorliegend in Verlängerung der Außenwand des Ansaugkanals angeordnet ist. Der Abstand vom Gebläse 2 ist vorliegend minimiert, d.h. die Klappe 5 ist in der Stellung, in welcher sie in Richtung der Außenwand des Ansaugkanals des Gebläses zeigt, nur wenig von demselben beabstandet (siehe Fig. 4). Die Schwenkachse S der anderen Klappe 8, welche den Luftdurchlass durch die dritte Öffnung 7 regelt, ist im zentralen Bereich angeordnet, d.h. sie schneidet vorliegend die Mittellängsachse des Misch- und Ansaugkanals 3c, wobei die Schwenkachse S dieser Klappe 8 um ca. 50% näher am Ansaugkanal des Gebläses 2 als die Schwenkachse S der anderen Klappe 5 angeordnet ist. Im vollständig geöffneten Zustand erstreckt sich die Klappenfläche der Klappe 8 im Wesentlichen in die Luftansaugrichtung des Gebläses 2.

Wie aus der Darstellung von Fig. 1 ersichtlich, ist die Umluftöffnung 4 erste Klappe 5 vollständig geschlossen, so dass die erste Frischluftöffnung 6 vollständig geöffnet ist. Ferner befindet sich die zweite Klappe 8 in ihrem vollständig geöffneten Zustand, so dass auch die zweite Frischluftöffnung 7 geöffnet ist. Somit wird ausschließlich Frischluft vom Gebläse 2 angesaugt. Der Luftstrom durch die Öffnungen 6 und 7 ist durch gestrichelte Pfeile verdeutlicht.

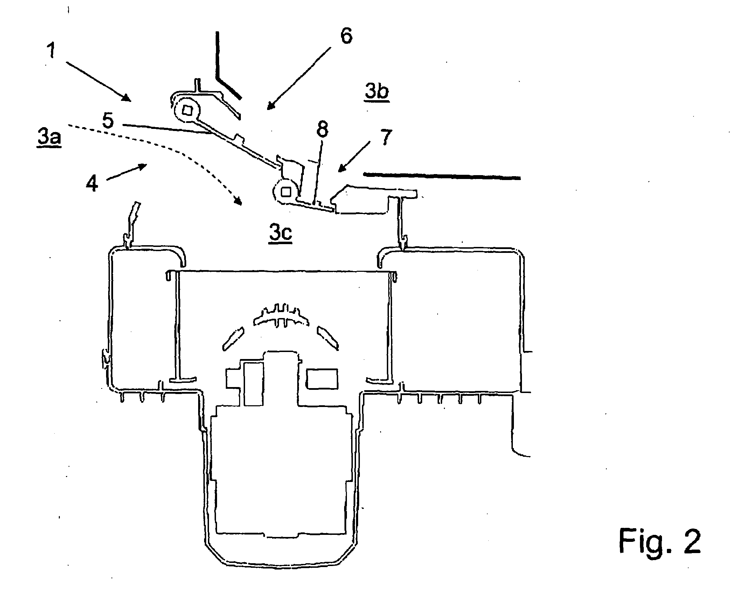

Gemäß der Darstellung von Fig. 2 sind die Klappen 5 und 8 in der anderen Endstellung, d.h. die erste Klappe 5 verschließt die erste Frischluftöffnung 6 vollständig, so dass die Umluftöffnung 4 vollständig geöffnet ist. Die zweite Klappe 8 verschließt die zweite Frischluftöffnung 7 vollständig. Somit wird keine Luft aus der Umgebung angesaugt und es wird lediglich Umluft vom Fahrzeuginnenraum umgewälzt und temperiert.

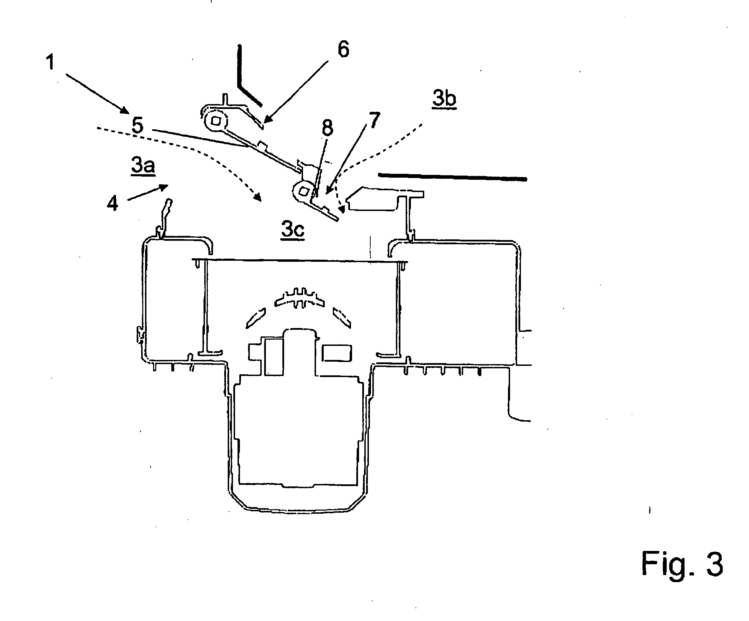

In Fig. 3 ist ein Betriebszustand dargestellt, bei dem der Umluft ein kleiner Außenluftanteil beigemischt wird. Hierfür ist die erste Klappe 5 in ihrer den Frischluftkanal 3b vollständig verschließenden Endstellung, jedoch ist die zweite Klappe 8 - im Unterschied zur Darstellung von Fig. 2 - einen Spalt geöffnet, so dass durch den Spalt Frischluft vom Frischluftkanal 3b in den Misch- und Ansaugkanal 3c einströmt. Diese Stellung ist insbesondere in einem aufheizenden Betriebszustand bei geringen Außentemperaturen sinnvoll, um den Innenraum schneller erwärmen zu können.

Fig. 4 zeigt einen Betriebszustand, in welchem der Frischluft ein kleiner Umluftanteil beigemischt wird. Hierfür ist die erste Klappe 5 in einer Stellung, welche einen Spalt für die Umluft freigibt, vorliegend ist das von der Schwenkachse entfernte Klappenende der Klappe 5, wie auch die in der in Fig. 4 dargestellten Schnittebene verlaufende Klappenfläche in Verlängerung des Ansaugkanals des Gebläses 3 angeordnet, so dass die erste Frischluftöffnung 6 vollständig offen ist. Ferner ist die zweite Frischluftöffnung 7 vollständig geöffnet, wobei die Klappenstellung derjenigen von Fig. 1 entspricht, d.h. die Klappe 8 befindet sich in ihrer (offenen) Endstellung.

Der Antrieb der Klappen erfolgt vorliegend über einen einzigen Aktuator in Form eines elektrischen Stellmotors über eine entsprechende Getriebeverbindung. Alternativ kann die Betätigung auch mechanisch über flexible Wellen und/oder Bowdenzüge erfolgen.

Gemäß einer Variante des Ausführungsbeispiels sind die beiden Klappen 5 und 8 über getrennt ausgebildete und von einer gemeinsamen Steuereinheit regelbare Aktuatoren betätigbar. Hierbei wird die Stellung der zweiten Klappe unter Berücksichtigung des Staudrucks im Luftansaugbereich von außen geregelt, d.h. beispielsweise bei hohen Fahrtgeschwindigkeiten, bei denen ein hoher Staudruck in diesem Bereich herrscht, wird die Klappe geschlossen, um den Komfort im Fahrzeuginnenraum nicht zu beeinträchtigen. Zusätzlich wird der Staudruck unter Berücksichtigung der Klappenstellungen bei der Gebläsedrehzahl berücksichtigt, so dass bei einer schnellen Änderung des Staudrucks die Einstellungen schnell angepasst werden und der Istzustand im Fahrzeuginnenraum nicht durch die Änderung der äußeren Bedingungen verändert wird.

Die Anordnung der Klappen ist gemäß dem vorliegenden Ausführungsbeispiel schräg übereinander, jedoch können die Klappen - bei entsprechender Anordnung der zuführenden Luftkanäle - auch nebeneinander oder direkt übereinander angeordnet sein.

## Patentansprüche

1. Vorrichtung zur Luftmengenregelung einer Kraftfahrzeug-Klimaanlage, mit in einem Gehäuse (3) ausgebildeten Luftkanälen (3a, 3b, 3c) und mindestens zwei Klappen (5, 8) zum Öffnen und Schließen von Öffnungen (4, 6, 7), welche die Luftzusammensetzung der aus unterschiedlichen, zuführenden Luftkanälen (3a, 3b) kommenden Luft in einem gemeinsamen, weiterführenden, dritten Luftkanal (3c) regeln, wobei mindestens zwei der Öffnungen (6, 7), deren Luftdurchlass von unterschiedlichen Klappen (5, 8) regelbar ist, dem gleichen zuführenden Luftkanal (3b) zugeordnet sind und dieser zuführende Luftkanal (3b) ein Frischluftkanal (3b) ist, über den Frischluft von der Umgebung des Fahrzeugs dem Fahrzeuginnenraum zuführbar ist, wobei eine der Klappen (5, 8) für eine Regelung des Luftdurchlasses durch zwei Öffnungen (4, 6) unterschiedlichen Luftkanälen (3a, 3b) zugeordnet ist, **dadurch gekennzeichnet, dass** die zweite Klappe (8) ausschließlich dem Frischluftkanal zugeordnet ist.

2. Vorrichtung nach Anspruch 1, **dadurch gekennzeichnet, dass** die Klappen (5, 8) Flügelklappen mit einem Flügel sind.

3. Vorrichtung nach Anspruch 1 oder 2, **dadurch gekennzeichnet, dass** die Schwenkachse (S) einer ersten Klappe (5), welche den Luftdurchlass durch zwei unterschiedlichen Luftkanälen (3a, 3b) zugeordneten Öffnungen (4, 6) regelt, in einer Ebene liegt, die senkrecht zur Mittellängsachse des dritten Luftkanals (3c) angeordnet ist, und in dieser Ebene seitlich versetzt bezüglich der Mittellängsachse des dritten Luftkanals (3c) ist.

4. Vorrichtung nach einem der vorhergehenden Ansprüche, **dadurch gekennzeichnet, dass** die Schwenkachse (S) einer zweiten Klappe (8), welche den Luftdurchlass durch eine Öffnung (7) regelt, die Mittellängsachse des dritten Luftkanals (3c) schneidet oder nahe derselben verläuft.

5. Vorrichtung nach Anspruch 3 und 4, **dadurch gekennzeichnet, dass** die Schwenkachsen (S) der Klappen (5, 8) unterschiedlich beabstandet von einem am Ende des dritten Luftkanals (3c) angeordneten Gebläse (2) angeordnet sind, wobei die zentral angeordnete Schwenkachse (S) näher am Gebläse (2) angeordnet ist als die seitlich versetzt angeordnete Schwenkachse (S).

6. Vorrichtung nach Anspruch 5, **dadurch gekennzeichnet, dass** die Schwenkachsen (S) der Klappen (5, 8) in einer Ebene angeordnet sind, die in einem Winkel von 25 bis 75°, insbesondere von 45° +/- 5°, bezüglich der Mittellängsachse des dritten Luftkanals (3c) angeordnet ist.

7. Vorrichtung nach einem der vorhergehenden Ansprüche, **dadurch gekennzeichnet, dass** die Schwenkachsen (S) der Klappen (5, 8) jeweils luftanströmseitig angeordnet sind.

8. Vorrichtung nach einem der vorhergehenden Ansprüche, **dadurch gekennzeichnet, dass** Klappen (5, 8) parallel zueinander verlaufende Schwenkachsen (S) aufweisen.

9. Vorrichtung nach einem der vorhergehenden Ansprüche, **dadurch gekennzeichnet, dass** der Luftkanal mit der Öffnung (4) am Ende, deren Luftdurchlass mittels einer Klappe (5) regelbar ist, welche auch den Luftdurchlass durch mindestens eine andere, einem anderen Luftkanal zugeordnete Öffnung (6) regelt, ein Umluftkanal (3a) ist, über den Luft aus dem Innenraum des Fahrzeugs angesaugt werden kann.

10. Vorrichtung nach einem der vorhergehenden Ansprüche, **dadurch gekennzeichnet, dass** die Klappe (8), welche den Luftdurchlass durch die zweite Öffnung (7) regelt, welche einem Frischluftkanal (3b) zugeordnet ist, getrennt von der Klappe (5) einstellbar ist, welche den Luftdurchlass durch die unterschiedlichen Luftkanälen zugeordneten Öffnungen (4, 6) regelt, wobei die Einstellung der Klappe (8), die der Frischluft zugeordnet ist, in Abhängigkeit des Luftdrucks im Bereich der Luftansaugung und/oder der Fahrtgeschwindigkeit erfolgt.

## Claims

1. A device for regulating air flow for the air conditioning system of a vehicle, comprising air ducts (3a, 3b, 3c) formed in a housing (3), and at least two flaps (5, 8) for opening and closing openings (4, 6, 7), which regulate the air composition of air coming from different, supplying air ducts (3a, 3b) into a common, forwarding, third air duct (3c), wherein at least two of the openings (6, 7), the air flow through which can be regulated using different flaps (5, 8), are assigned to the same supplying air duct (3b) which is a fresh-air duct (3b), via which fresh air from the vehicle surroundings can be delivered to the vehicle interior, wherein one of the flaps (5, 8) is assigned to different air ducts (3a, 3b) to regulate the air flow through two openings (4, 6), **characterized in that** the second flap (8) is assigned exclusively to the fresh-air duct.

2. The device according to claim 1, **characterized in that** the flaps (5, 8) are wing flaps having a wing.

3. The device according to claim 1 or 2, **characterized in that** the swivel axis (S) of a first flap (5), which regulates the air flow through two openings (4, 6) assigned to different air ducts (3a, 3b), lies in a plane that is disposed perpendicularly to the central longitudinal axis of the third air duct (3c), and, in this plane, is offset laterally relative to the central longitudinal axis of the third air duct (3c).

4. The device according to one of the preceding claims, **characterized in that** the swivel axis (S) of a second flap (8), which regulates the air flow through an opening (7), intersects the central longitudinal axis of the third air duct (3c) or extends close thereto.

5. The device according to claim 3 and 4, **characterized in that** the swivel axes (S) of the flaps (5, 8) are situated at different distances away from a blower (2) disposed at one end of the third air duct (3c), wherein the centrally disposed swivel axis (S) is situated closer to the blower (2) than is the laterally offset swivel axis (S).

6. The device according to claim 5, **characterized in that** the swivel axes (S) of the flaps (5, 8) are situated in a plane at an angle of 25 to 75°, in particular of 45° +/-5°, relative to the central longitudinal axis of the third air duct (3c).

7. The device according to one of the preceding claims, **characterized in that** the swivel axes (S) of the flaps (5, 8) are disposed on the air-inflow side in each case.

8. The device according to one of the preceding claims, **characterized in that** flaps (5, 8) have swivel axes (S) that extend parallel to one another.

9. The device according to one of the preceding claims, **characterized in that** the air duct having the opening (4) on the end, the air flow of which can be regulated using a flap (5) that also regulates the air flow through at least one other opening (6) assigned to another air duct, is a recirculation air duct (3a), via which air can be drawn out of the interior of the vehicle.

10. The device according to one of the preceding claims, **characterized in that** the flap (8) that regulates the air flow through the second opening (7) that is assigned to a fresh-air duct (3b) can be adjusted separately from the flap (5) that regulates the air flow through the openings (4, 6) assigned to different air ducts, wherein the flap (8) which is assigned to fresh air is adjusted depending on the air pressure in the region of the air intake and/or the vehicle speed.

## Revendications

1. Dispositif servant au réglage du débit d'air d'un système de climatisation d'un véhicule automobile, comprenant des conduits d'air (3a, 3b, 3c) configurés dans un carter (3) et au moins deux volets (5, 8) servant à ouvrir et à fermer des ouvertures (4, 6, 7) qui règlent, dans un troisième conduit d'air commun (3c) qui se prolonge, la composition de l'air provenant de différents conduits d'air d'alimentation (3a, 3b), où au moins deux des ouvertures (6, 7), dont l'entrée d'air est réglable par différents volets (5, 8), sont associées au même conduit d'air d'alimentation (3b), et ce conduit d'air d'alimentation (3b) est un conduit d'air frais (3b) par lequel de l'air frais provenant du milieu ambiant du véhicule peut être fourni à l'habitacle du véhicule, où l'un des volets (5, 8), prévu pour un réglage du passage de l'air traversant deux ouvertures (4, 6), est associé à différents conduits d'air (3a, 3b),
**caractérisé en ce que** le deuxième volet (8) est associé exclusivement au conduit d'air frais.

2. Dispositif selon la revendication 1, **caractérisé en ce que** les volets (5, 8) sont des volets à ailettes comprenant une ailette.

3. Dispositif selon la revendication 1 ou 2, **caractérisé en ce que** l'axe de pivotement (S) d'un premier volet (5), qui règle le passage de l'air à travers deux ouvertures (4, 6) associées à différents conduits d'air (3a, 3b), se trouve dans un plan qui est disposé perpendiculairement à l'axe longitudinal médian du troisième conduit d'air (3c) et, dans ce plan, est décalé latéralement par rapport à l'axe longitudinal médian du troisième conduit d'air (3c).

4. Dispositif selon l'une quelconque des revendications précédentes, **caractérisé en ce que** l'axe de pivotement (S) d'un deuxième volet (8), qui règle le passage de l'air à travers une ouverture (7), coupe l'axe longitudinal médian du troisième conduit d'air (3c) ou s'étend à proximité de ce même axe longitudinal médian.

5. Dispositif selon les revendications 3 et 4, **caractérisé en ce que** les axes de pivotement (S) des volets (5, 8) sont disposés en étant espacés de façon différente, par rapport à une soufflante (2) disposée au niveau de l'extrémité du troisième conduit d'air (3c), où l'axe de pivotement (S) disposé de façon centrale est disposé en étant plus près de la soufflante (2) que l'axe de pivotement (S) disposé en étant décalé latéralement.

6. Dispositif selon la revendication 5, **caractérisé en ce que** les axes de pivotement (S) des volets (5, 8) sont disposés dans un plan qui se situe dans un angle compris entre 25° et 75°, en particulier de 45° +/- 5°, par rapport à l'axe longitudinal médian du troisième conduit d'air (3c).

7. Dispositif selon l'une quelconque des revendications précédentes, **caractérisé en ce que** les axes de pivotement (S) des volets (5, 8) sont disposé à chaque fois du côté de l'arrivée d'air.

8. Dispositif selon l'une quelconque des revendications précédentes, **caractérisé en ce que** des volets (5, 8) présentent des axes de pivotement (S) s'étendant parallèlement l'un à l'autre.

9. Dispositif selon l'une quelconque des revendications précédentes, **caractérisé en ce que** le conduit d'air comprenant l'ouverture (4) placée au niveau de l'extrémité, ouverture dont le passage de l'air est réglable au moyen d'un volet (5) qui règle également le passage de l'air à travers au moins une autre ouverture (6) associée à un autre conduit d'air, est un conduit d'air de circulation (3a) par lequel peut être aspiré de l'air provenant de l'habitacle du véhicule.

10. Dispositif selon l'une quelconque des revendications précédentes, **caractérisé en ce que** le volet (8), qui règle le passage de l'air à travers la deuxième ouverture (7) qui est associée à un conduit d'air frais (3b), est réglable séparément du volet (5) qui règle le passage de l'air à travers les ouvertures (4, 6) associées à différents conduits d'air, où le réglage du volet (8), qui est associé à l'air frais, est réalisé en fonction de la pression d'air dans la zone de l'aspiration d'air et / ou en fonction de la vitesse de déplacement.
